Europäisches Patentamt

European Patent Office

Office européen des brevets

(11) Publication number: **0 151 830**
**B1**

# EUROPEAN PATENT SPECIFICATION

(45) Date of publication of patent specification: 27.07.88

(21) Application number: 84201926.7

(22) Date of filing: 21.12.84

(51) Int. Cl.⁴: **C 04 B 28/06,** C 04 B 28/10 //
(C04B28/06, 7:02, 14:42,
18:08, 22:06, 24:06, 32:02,
40:00, 40:02),(C04B28/10,
7:02, 7:32, 14:42, 18:08,
24:06, 32:02, 40:00, 40:02)

(54) Process for the quick and controlled setting of a hydraulic binder containing both Portland cement and alumina cement, hydraulic binder, as well as a process for the manufacture of building elements.

(30) Priority: 29.12.83 NL 8304468

(43) Date of publication of application:
21.08.85 Bulletin 85/34

(45) Publication of the grant of the patent:
27.07.88 Bulletin 88/30

(84) Designated Contracting States:
AT BE CH DE FR GB IT LI LU NL SE

(56) References cited:
DE-A-2 518 799
DE-B-1 198 723
DE-B-2 006 917
GB-A- 524 227
GB-A-1 313 763

(73) Proprietor: Industriele Maatschappij Veldhoen
B.V.
Almelosestraat 83
NL-8102 HC Raalte (NL)

(72) Inventor: Veldhoen, Jan Hendrik
Binnenweg 39
7391 GL Twello (NL)

(74) Representative: Kupecz, Arpad et al
Octrooibureau Los en Stigter B.V. Postbox
20052
NL-1000 HB Amsterdam (NL)

Courier Press, Leamington Spa, England.

## Description

The present invention relates to a process for the quick and controlled setting of a hydraulic binder containing both Portland cement and alumina cement. Furthermore the invention relates to a hydraulic binder, optionally in a mixture with a reinforcing material, for use herein, as well as to a process for the manufacture of building elements using such a hydraulic binder

GB—A—524 227 discloses a process for manufacturing precast cement-rubber latex products such as titles, blocks, pipes and the like by mixing aluminous cement and hydraulic or other suitable cement with a latex.

DE—A—2 518 799 discloses a process for the preparation of cement mixtures of Portland cement and alumina cement, as well as the use of citric acid.

Some applications of mixtures of Portland and alumina cement and particularly the problems involved therewith, have been revealed by T. D. Robson in a lecture before the "Road Building Materials Group of the Society" on February 16, 1950. Mixtures of Portland cement and alumina cement provide the advantage of a setting which is quicker than those of the individual cements. Moreover the problems frequently inherent to the quick-set special cements with respect to storage and preservation can be avoided, since the individual cements being per se well storable may be stored separately before being mixed and even the mixtures may be stored for longer time provided that water is strictly excluded.

However, it has appeared in practice that the potential applications of such cement mixtures are limited because of the uncontrollability of the processing time, the strength development and the final strength, whereas the final strength is usually lower than those of the individual cements and becomes even lower at later temperature load. Furthermore the setting time being connected with the processing time is strongly dependent on the proportion of both cements in the mixture, for which reason small fluctuations in composition between subsequent cement supplies may cause a retarded or accelerated setting and disturbances. Therefore the use of mixtures of Portland cement and alumina cement is only recommended for a limited number of applications.

In the manufacture of building elements, in particular in the continuous manufacture there is, however, a need for binders which bind quicker than each of Portland cement and alumina cement in order to obtain as fast as possible a manageable strength after processing to a mortar, so that the moulded building elements can be removed from the production-line of the continuous manufacture installation for purposes of a final curing. A quicker set results in a shorter residence time of the element in the continuous manufacture installation and so in a higher productivity. Until now special cements mixes have been used to this end, wherein the initial strength is determined by formation of sulfo-aluminate. The formation of sulfo-aluminate, however, entails the disadvantage of later changes of length and strength.

The invention aims to avoid the disadvantages and problems mentioned above and to provide a binder composition for a mortar which should fulfil the following requirements. A processing time of at least 15 min. should be available for the mortar, whereas after processing the mortar should have already within 6 min. some strength and within 20 min. a manageable strength of about 2 N/mm² flexural tensile. Furthermore the development of the final strength should proceed without disturbance. Finally the quick setting of the binder composition should be controllable, it means different supplies of the starting materials should not give different results.

Accordingly the invention provides a process for the quick and controlled setting of a hydraulic binder containing both Portland cement and alumina cement, characterized in that a composition comprising Portland cement and alumina cement in a weight proportion of from 3:1 to 10:1 and an additional amount of a calcium compound of from 0.5 to 5%, by weight, based on the dry weight of Portland cement plus alumina cement, is prepared, water and an acid in an amount of 0.1—0.3%, by weight, based on the total dry weight of the hydraulic binder is added to this composition and the slurry obtained is allowed to set at a temperature of 40—60°C.

Generally also an aggregate, such as sand, may be added to said binder composition.

The quick-setting mortar prepared by the process of the invention obtains a manageable strength within the short time as a result of an acceleration of the aluminates by the addition of the calcium compound, in particular calcium hydroxide or hydrated lime. Herein the binding strength is optimized by the indicated amount of the calcium compound.

After processing and moulding the mortar it is preferred to have the setting to occur at a temperature of 40—60°C. Hereby it is rendered possible that the silicates are only hydrated, after the aluminates have been converted into stable end products. If the heat treatment is omitted it may be true that frequently initially higher strengths occur, but then in most cases later a loss of strength follows, which cannot anymore be compensated by follow up reaction. Therefore porosity and decrease of the strength are avoided by the heat treatment.

It is preferred to add fly ash to the binder compositon. On the one hand the hydrated lime which is later formed from silicates by hydration, largely is rendered harmless thereby, whereas on the other hand the fly ash contributes to the strength. The reaction with the fly ash results in a reduced porosity, whereby pollution, atmospheric attack and bleeding of lime and iron from the final product are restricted. Furthermore the attack of glass fibers included in the building elements as reinforcement appeared to be prevented better.

It should be noted that the processing time of the mortar is adjusted by the addition of acid. Amounts of acids of from 0.1 to 0.3, by weight, based on the total dry weight of the hydraulic binder, result in processing times of the mortar, which are desirable for a continuous production-line of building elements. Conveniently the acid is previously dissolved in the water to be added and thus together with the water contacted with the homogeneous dry binder composition.

Both inorganic and organic acids may be used, whereas polyfunctional carboxylic acids may be particularly mentioned. As acid preferably citric acid is added.

Further according to common practice from 0.1 to 0.5%, by weight, of a flux may be included in the mixture of water and binder composition in order to accelerate the mixing and to avoid an excessive inclusion of air.

The mortars preparable by the most preferred process of the invention set quickly and result in a high final strength, for which reason the building elements formed thereform can be applied in various fields.

In case of certain applications, such as for example light fire screening plates, where not so much the strength but rather exclusively the quick setting is important, some of the above indicated preferred measures can be omitted.

It appeared that for different supplies of the starting materials a virtually constant behaviour is observed when carrying out the process of the invention, which is very surprising in view of the known variation of the processing time of mixtures of Portland cement and alumina cement in dependence of their origin and composition.

In accordance with the above explanation a hydraulic binder to be used according to the invention comprises 75—90%, by weight, preferably 79—84%, by weight, of Portland cement 9—24%, by weight, preferably 14—19%, by weight, of alumina cement, 0.5—5%, by weight, preferably 1.5—2%, by weight, of hydrated lime and 0.1—0.3% by weight, of an acid.

Optionally 15—50%, by weight, of fly ash, on base of the dry weight of Portland cement plus alumina cement, may be added hereto. A hydraulic binder according to the invention has in that case as composition 50—70%, by weight, of Portland cement, 7—20%, by weight, of alumina cement, 15—30%, by weight, of fly ash, 0.5—5%, by weight, of hydrated lime, and 0.1—0.3%, by weight, of an acid. The amount of fly ash may be varied with respect to the amount of Portland cement or alumina cement within a broad range, and so may the absolute percentage of the Portland cement and alumina cement respectively. The mutual proportion between the amounts of Portland cement and alumina cement respectively in connection with the additional amount of hydrated lime is yet more critical and should be comprised within the earlier indicated ranges.

A hydraulic binder containing fly ash is preferred, which contains 52—62%, by weight, of Portland cement, 12—60%, by weight, of alumina cement, 23—28%, by weight, of fly ash and 3—5%, by weight, of hydrated lime.

The present invention also relates to mixtures containing besides the said binders a reinforcing material, such as glass fibers.

The process for the setting of hydraulic binders according to the invention as well as the hydraulic binders according to the invention may be used for the manufacture of building elements, wherein the advantages of the invention are especially manifested, when the manufacture of these building elements is carried out continuously. The continuous manufacture of building elements requires the avoidance of fluctuations in the processing time and the beginning of the early strength in order to prevent disturbances in the production-line. Furthermore the mortar should achieve as fast as possible a manageable strength during the binding. These requirements are fulfilled with the process of the invention.

The process for the manufacture of building elements, according to the invention will now examplarily be elucidated on the base of the accompanying drawing, wherein the present process is schematically illustrated.

In the drawing a sand container 1, a Portland cement container 2, in alumina cement container 3, a fly ash container 4 and a hydrated lime container 5 are represented. Through conducts these containers are connected with a dosing device 6, by which metered amounts of the starting materials are introduced batch-wise in a dry mixture 7. After mixing a batch in the dry mixer 7 the batch is conducted to a storage container 8 and a new batch may be dosed in the dry mixer 7. A second series of containers contains the wet components to be added. Thus a water container 9, an acid container 10, containing for example a concentrated citric acid solution, and a flux container are through conducts in connection with a dosing device 12, by which metered amounts of these components are introduced in a mixer 13. An aqueous solution prepared in the mixer 13 is thereupon conducted to a storage container 14 which optionally may be provided with a temperature control device 15 in order to secure a constant temperature of the aqueous solution independent of the ambient temperature. The preparation of the aqueous solution is carried out batch-wise.

By means of a dosing device 16 the dry mixture kept in the storage container 8 is introduced in a continuous mixer 18 with a desired rate. Through a dosing device 17 also the storage container 14 containing the solution supply is connected with continuous mixer 18 and thus the suitable amount of water containing the acid and the flux is continuously combined with the dry mixture of hydraulic binders and aggregate under formation of a mortar.

Next a glass container 19 contains glass fibers which are fed to a glass cutting device 20 which also functions as dosing device. Through a conduct the cut glass fibers are introduced in an external mixer 21 and mixed therein with the mortar leaving the continuous mixer 18 with constant rate.

From the external mixer 21 the mixture of mortar and glass fibers is conducted to a moulding section 22, which may comprise for example closed or open moulds.

The formed elements being formed in the moulds are introduced in a setting section 23 and subjected there to a heat treatment. In practice the formed elements are heated to a temperature of 40—60°C for 5—20 min. Thus the formed elements obtain a manageable strength and thereupon they may be removed from the moulds and be transported to a curing section 24 for a usual final curing, for example during 24 h at 80°C wet and 14d at 20°C wet. The cured building elements are finally processed to the final product and packed in a section 25.

## Claims

1. A process for the quick and controlled setting of a hydraulic binder containing both Portland cement and alumina cement, characterized in that a composition comprising Portland cement and alumina cement in a weight proportion of 3:1 to 10:1 and an additional amount of a calcium compound of from 0.5 to 5%, by weight, based on the dry weight of Portland cement plus alumina cement, is prepared, water and an acid in an amount of 0.1—0.3%, by weight, based on the total dry weight of the hydraulic binder is added to this composition and the slurry obtained is allowed to set at a temperature of 40—60°C.

2. The process according to claim 1, characterized in that further fly ash is included in the cement composition.

3. The process according to claim 2, characterized in that the fly ash is added in an amount of 15—50%, by weight, based on the dry weight of Portland cement plus alumina cement.

4. The process according to claims 1—3, characterized in that citric is added as the acid.

5. The process according to claims 1—4, characterized in that the acid is added together with the water.

6. A hydraulic binder, characterized in that it contains 75—90%, by weight, of Portland cement, 9—24%, by weight, of alumina cement, 0.5—5%, by weight, of hydrated lime, and 0.1—0.3%, by weight, of an acid.

7. A hydraulic binder, characterized in that it contains 50—70%, by weight, of Portland cement, 7—20%, by weight, of alumina cement, 15—30%, by weight, of fly ash, 0.5—5%, by weight, of hydrated lime, and 0.1—0.3%, by weight, of an acid.

8. The mixture of a hydraulic binder according to claim 6 or 7, and a reinforcing material.

9. The mixture according to claim 8, characterized in that the reinforcing materials consists of glass fibers.

10. A process for the manufacture of building elements, characterized in that water is added to a hydraulic binder according to claim 6 or 7 or to a mixture according to claim 8 or 9, the slurry obtained is subjected to moulding, the moulded elements are set at 40—60°C and the set elements are cured at about 80°C in a usual manner.

11. Building elements obtained under application of the process according to claim 10.

## Patentansprüche

1. Verfahren zum schnellen und kontrollierten Abbinden eines hydraulischen Bindemittels, das Portland-Zement und Tonerde-Zement enthält, dadurch gekennzeichnet, daß eine Zusammensetzung mit Portland-Zement und Tonerde-Zement in einer Gewichtsrelation von 3:1 bis 10:1 und eine zusätzliche Menge eines Kalzium-Gemisches von 0,5 bis 5 Gew.-% auf der Basis des Trockengewichts des Portland-Zements und des Tonerde-Zements zubereitet wird, daß Wasser und eine Säure in einer Menge von 0,1 bis 0,3 Gew.-% auf der Basis des Gesamttrockengewichts des hydraulischen Bindemittels zu dieser Zusammensetzung zugegeben wird, und daß man die erhaltene Aufschlämmung bei einer Temperatur von 40 bis 60°C abbinden läßt.

2. Verfahren nach Anspruch 1, dadurch gekennzeichnet, daß des weiteren Flugasche der Zementzusammensetzung zugeführt wird.

3. Verfahren nach Anspruch 2, dadurch gekennzeichnet, daß die Flugasche in einer Menge von 15 bis 50 Gew.-% bezogen auf das Trockengewicht von Portland- und Tonerde-Zement zugeführt wird.

4. Verfahren nach Anspruch 1 bis 3, dadurch gekennzeichnet, daß Zitronensäure als Säure zugegeben wird.

5. Verfahren nach Anspruch 1 bis 4, dadurch gekennzeichnet, daß die Säure zusammen mit dem Wasser zugeführt wird.

6. Hydraulisches Bindemittel, dadurch gekennzeichnet, daß es 75 bis 90 Gew.-% Portland-Zement, 9 bis 24 Gew.-% Tonerde-Zement, 0,5 bis 5 Gew.-% hydratisierten Kalk und 0,1 bis 0,3 Gew.-% einer Säure aufweist.

7. Hydraulisches Bindemittel, dadurch gekennzeichnet, daß es 50 bis 70 Gew.-% Portland-Zement, 7 bis 20 Gew.-% Tonerde-Zement, 15 bis 30 Gew.-% Flugasche, 0,5 bis 5 Gew.-% hydratisierten Kalk und 0,1 bis 0,3 Gew.-% einer Säure aufweist.

8. Mischung eines hydraulischen Bindemittels nach Anspruch 6 oder 7 und eines verstärkenden Materials.

9. Mischung nach Anspruch 8, dadurch gekennzeichnet, daß das verstärkende Material aus Glasfasern besteht.

10. Verfahren zur Herstellung von Bauwerkselementen, dadurch gekennzeichnet, daß Wasser einem hydraulischen Bindemittel gemäß Anspruch 6 oder 7 zugeführt wird, oder daß Wasser zu einer Mischung gemäß Anspruch 8 oder 9 zugeführt wird, daß die erhaltene Aufschlämmung einem Formvorgang unterzogen wird und daß die geformten Elemente bei einer Temperatur von 40 bis 60°C abbinden und die abgebundenen Elemente bei einer Temperatur um 80°C in herkömmlicher Weise aushärten.

11. Bauwerkselemente unter Verwendung des Verfahrens gemäß Anspruch 10.

## Revendications

1. Procédé pour la prise rapide et contrôlée d'un liant hydraulique contenant à la fois du ciment Portland et du ciment d'alumine, caractérisé en ce qu'on prépare une composition comprenant du ciment Portland et du ciment d'alumine dans un rapport pondéral de 3:1 à 10:1 et une quantité additionnelle d'un composé du calcium de 0,5 à 5% en poids sur la base du poids sec de ciment Portland plus le ciment d'alumine, on ajoute à cette compositon de l'eau et un acide à une concentration de 0,1 à 0,3% en poids sur la base du poids total à sec du liant hydraulique, et on laisse le mortier obtenu faire prise à une température de 40 à 60°C.

2. Procédé suivant la revendications 1, caractérisé en ce qu'en outre des cendres volantes sont incorporées dans la composition de ciment.

3. Procédé suivant la revendication 2, caractérisé en ce que les cendres volantes sont ajoutées à raison de 15 à 50% en poids, sur la base du poids à sec du ciment Portland plus le ciment d'alumine.

4. Procédé suivant les revendications 1 à 3, caractérisé en ce que l'acide ajouté est l'acide citrique.

5. Procédé suivant les revendications 1 à 4, caractérisé en ce que l'acide est ajouté en même temps que l'eau.

6. Liant hydraulique, caractérisé en ce qu'il contient 75 à 90% en poids de ciment Portland, 9 à 24% en poids de ciment d'alumine, 0,5 à 5% en poids de chaux hydratée et 0,1 à 0,3% en poids d'un acide.

7. Liant hydraulique, caractérisé en ce qu'il contient 50 à 70% en poids de ciment Portland, 7 à 20% en poids de ciment d'alumine, 15 à 30% en poids de cendres volantes, 0,.5 à 5% en poids de chaux hydratée et 0,1 à 0,3% en poids d'un acide.

8. Mélange d'un laint hydraulique suivant la revendication 6 ou 7 et d'une matière de renforcement.

9. Mélange suivant la revendication 8, caractérisé en ce que la matière de renforcement consiste en fibres de verre.

10. Procédé pour la fabrication d'éléments de construction, caractérisé en ce que de l'eau est ajoutée à un liant hydraulique suivant la revendication 6 ou 7, ou à un mélange suivant la revendication 8 ou 9, le mortier obtenu est soumis à un moulage, les éléments moulés font prise à 40—60°C et les éléments qui ont fait prise sont durcis à 80°C environ d'une manière usuelle.

11. Eléments de construction obtenus par application du procédé suivant la revendication 10.